# EUROPEAN PATENT APPLICATION

(11) **EP 2 896 922 A1**
(43) Date of publication of application: **22.07.2015**
(21) Application number: 14188148.2
(22) Date of filing: 08.10.2014
(51) Int. Cl.: F28D 20/00

(54) **System for storing thermal energy**

(30) Priority: 09.10.2013 ES 201331492
(71) Applicant: Arraela S.L., 15623 La Coruna (ES)
(72) Inventor: Caruncho Rodado, Juan Manuel, 15621 La Coruña (ES)
(74) Representative: Del Valle Valiente, Sonia

(57) **Abstract**

System for storing thermal energy comprising, at least, a first container (1) storing a heat transfer fluid at a higher temperature and, at least, a second container (2) storing the heat transfer fluid at a lower temperature, linked by means of elements capable of using the energy due to the thermal gap therebetween; where the first container (1) and the second container (2) are made entirely or partly of a material having a great heat storage capability, the first container (1) being provided inside the second container (2) by means of a division (1a) which inside is in contact with the fluid at a higher temperature, and outside with the fluid at a lower temperature.

## Description

### Object of the invention

The object of the present invention is a new system for storing thermal energy having a configuration based on containers filled with heat-retaining fluids, which generally belongs to the field of construction systems in the energy field.

Said configuration, in combination with a suitable engineering development, allows for decreasing the cost of storing thermal energy, and also for simplifying said storage, which is greater as the amount of stored energy increases.

### Prior art of the invention

Nowadays thermal energy storage systems such as those used in thermosolar power stations are known; these systems comprise a first container storing a heat transfer fluid at a higher temperature, for example molten salt, and another container storing a lower temperature fluid, such that energy is recovered when the fluid flows from one container to the other, thus generating a thermal gap therebetween.

In the existing system, both containers are independent from each other, thus requiring the use of thermal isolators in both for preventing any heat exchange with the environment, although this is not optimally achieved due to the huge temperature gradients.

### Description of the invention

The configuration of the system of the invention solves the drawbacks in connection with the energy losses due to the temperature gradients with the environment, showing also an unexpected advantage, in view of the tests carried out, in that a specific material used in the implementation of this system reduces the volume of heat transfer fluid required for a specific amount of accumulated energy, thus reducing the cost. The system of the invention may be applied in any technical field requiring the storage of thermal energy.

According to the invention, the system comprises, at least, a firs container storing a heat transfer fluid at a higher temperature and, at least, a second container storing the heat transfer fluid at a lower temperature, linked by means of elements capable of using the energy due to the thermal gap therebetween, such as heat exchangers, etc. which do not form part of the present invention.

Both the first and the second containers are made entirely or partly of a material having a great heat storage capability, the first container being provided inside the second container by means of a division which inside is in contact with the fluid at a higher temperature, and outside with the fluid at a lower temperature.

With the containers being made of this material, the material itself stores thermal energy together with the thermal transfer fluid, thus reducing the volume of thermal transfer fluid required. Additionally, the inside configuration of the first container minimizes the losses with respect to the outside environment, since it is shielded by the second container, while the whole volume of the first container, the second container, and the heat transfer fluid cooperates in storing energy; in contrast to existing systems in certain technical fields having two separated metal containers, where only the energy stored in the higher temperature fluid container is considered.

An analytic comparison of the system of the invention with the existing system made up by separated metal containers shows that, for the same energy storage capability, the heat transfer fluid volume requirements are lower in the container of the invention. Said comparison shows two values as to the system of the invention, considering the energy stored only in the inner container (5323 m3) and considering the energy stored in both containers (2725 m3), with respect to the heat transfer fluid volume needs in the system having metal containers (11384 m3); all for a typical energy storage in a pair of molten salt metal containers.

The above estimates were obtained taking into account the following technical characteristics of the heat transfer fluid and the material making up the containers (HEATEK® concrete having a great heat storage capability):

| Characteristics of heat storage materials depending on temperature | | | | | |
|---|---|---|---|---|---|
| Heat storage material | T° | ρ | cp | "c" Heat capacity | |
| | *[°C]* | *(Kg*/*m3)* | *[J*/*kgK]* | *[MJ*/*m3K]* | *[kWht*/*m3K]* |
| HEATEK^{®} | 288 | 1906 | 1492 | 2,84 | 0,7899 |
| Thermal salt | 288 | 4000 | 2000 | 8,00 | 2,2222 |
| | | | | | |
| HEATEK^{®} | 388 | 1836 | 1512 | 2,78 | 0,7711 |
| Thermal salt | 388 | 4000 | 2640 | 10,56 | 2,9333 |
| | | | | | |
| HEATEK^{®} | 500 | 1765 | 1530 | 2,70 | 0,7501 |
| Thermal salt | 500 | 4000 | 3500 | 14,00 | 3,8889 |

Obtaining the following heat storage capabilities:

| Comparison between a conventional salt tank and "Concentric 1" tank with thermal salt and HEATEK^{®} concrete | | | | |
|---|---|---|---|---|
| | T° | Salt Volume | HEATEK^{®} Volume | Energy Stored |
| | *[°C]* | [m3] | [m3] | [Kwht] |
| Tank only with thermal salt | 288 | 499,15 | 0 | 8.539,4 |
| Tank with thermal salt and HEATEK^{®} concrete | 288 | 320,34 | 235,60 | 7.102,5 |
| Tank only with thermal salt | 388 | 518,18 | 0 | 8.778,4 |
| and HEATEK^{®} concrete | 388 | 332,56 | 235,60 | 8.778,4 |
| Tank only with thermal salt | 500 | 539,03 | 0 | 8.539,3 |
| Tank with thermal salt and HEATEK^{®} concrete | 500 | 345,94 | 235,60 | 10.896,4 |

The characteristics of these materials are:

| Heatek® heat storage concrete | |
|---|---|
| Compressive strength: | 42 MPa |
| Tensile strength: | 10 MPa (with fiber) and 6,70 MPa (without fiber) |
| Young modulus: | 11 GPa |
| Thermal conductivity: | 19 W/m·C |

| Heatek® insulation concrete | |
|---|---|
| Compressive strength: | 13 MPa |
| Tensile strength: | 2,35 MPa |
| Young modulus: | 2,5 GPa |
| Thermal conductivity: | 0,95 W/m·C |

These concretes can withstand direct contact with the salt, said salt penetrating several centimeters through the concrete and improving the compressive strength values. The salts, however, may corrode the corrugated steel, and therefore the use of alloys withstanding direct contact with the salt is proposed, such as stainless steel, AS516 Gr 70 steel, and the like. Or else, the use reinforcing bars made of pultruded stone, which shows higher compressive and tensile strength in comparison with steel; stress and temperature cause deformations similar to those caused in concrete, and direct contact with the salt does not cause any degradation with time. These fibers stop showing the above structural features above 550°C-580°C, and once this threshold is exceeded the fiber will not recover its characteristics; therefore, this issue must be taken into account when calculating the structure of the system.

Additionally, the use of concrete having these characteristics means that the bearing capacity thereof cooperates in the strength of the containers of the system, such that additional structural complementary elements may be dispensed with. Further, the use of concrete allows for making much bigger containers in comparison with metal containers, since the welded connections of metal containers have a limited depth, and therefore their mechanical strength is not equivalent to that of the whole cross section of the parts forming it; this differs from concrete containers where forging allows for the whole cross section to cooperate.

It is estimated that the construction cost of the container of the invention is about 64% and 41% lower than conventional containers.

### Brief description of the drawings

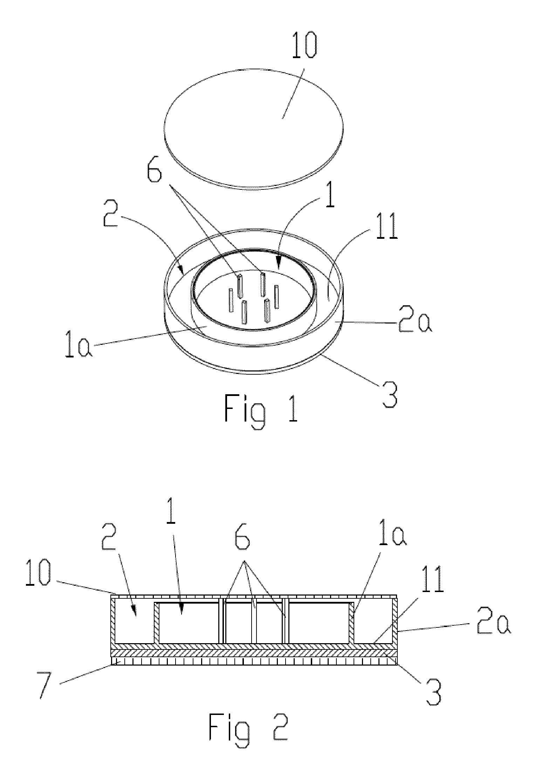

Figure 1 shows a view of the system of the invention.
Figure 2 shows a section view of the containers in the system of the invention.

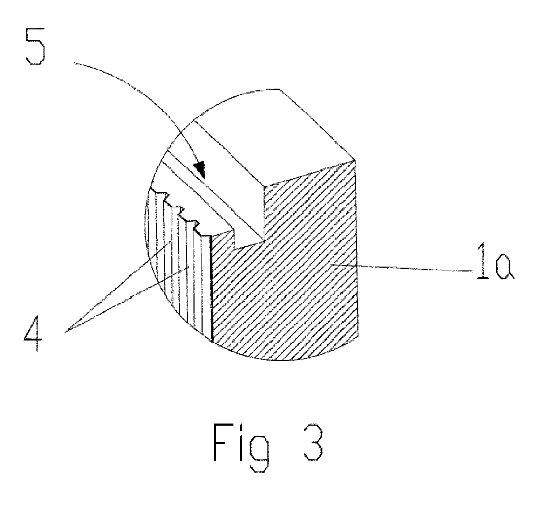

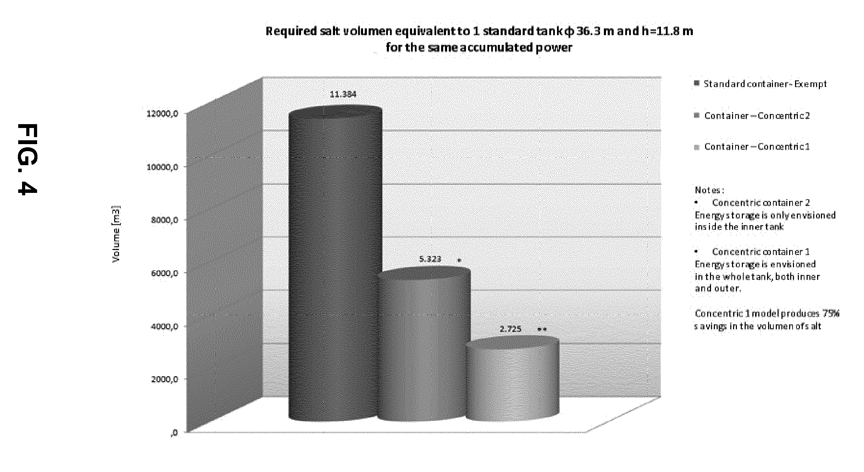

Figure 3 shows a detail of the relief and the upper channel on the cover of the first container.

### Description of a preferred embodiment

The thermal energy storage system of the invention is of the type comprising, at least, a first container (1) storing a heat transfer fluid at a higher temperature and, at least, a second container (2) storing a heat transfer fluid at a lower temperature, linked by means of elements capable of using the energy due to the thermal gap therebetween.

The invention discloses the first container (1) and the second container (2) being made partly or wholly of a material having a great heat storage capacity, the first container (1) being provided inside the second container (2) by means of a division (1a) which inside is in contact with the fluid at a higher temperature, and outside with the fluid at a lower temperature.

In a preferred embodiment shown in the drawings, both containers (1, 2) share the same base (11), from which walls forming both the division (1a) and the lateral cover (2a) limiting the second container emerge from. Similarly, both containers (1, 2) share the same cover (10). Since the containers (1, 2) are made partly or wholly of a material having a great heat storage capacity, the division (1a), lateral cover (2a), base (11) and/or cover (10) are all, or most of them, made in said material, such that the division (1a) may lie separated from the cover (10), without making contact therewith, for eliminating the thermal bridge in this area since the division (1a) is in contact with the heat transfer fluid at a higher temperature, and therefore it has a considerably higher temperature in comparison with the cover (10), which is not in contact with the fluid.

In the preferred embodiment of the invention, both containers (1, 2) are provided on a common foundation slab (3) made of a material having a great heat storage capacity; a lower thermal insulation (7) may be provided, for example a plurality of pipes surrounded by sand or a similar material, for cooling the foundations by means of air circulation and thus minimizing the impact to the material making up the ground.

In view of the size the containers (1, 2) may reach, and the structural strength required by the cover (10), the containers may also be provided with inner structural elements for supporting the cover (10), which ideally comprise pillars (6). These pillars (6) may preferably be made of a material having a great thermal storage capacity, thus cooperating in the energy storage and heat transfer, while their areas of contact with the cover, considerably small, minimize the thermal bridge. Its thickness depends on thermal and structural calculations. As to the cover (10), it is preferable light, in contrast with heavy structural covers.

In order to improve the heat exchange between the material having a great thermal storage capacity and the heat transfer fluid, some parts of the containers (1, 2) in contact therewith may be provided with a relief (4) intended for increasing the thermal exchange surface. In this non limiting example of the invention, said relief (4) is provided on the inner face of division (1a).

Additionally, the invention further comprises in the division (1a) an upper channel (5) for pouring the heat transfer fluid to the first container (1). This pouring increases the contact between the fluid and the upper portion of the division which may be above the fill level.

As to the materials, the invention discloses the high storage capacity material comprising heat storage concrete. This material, provided with the necessary reinforcing bars, nor shown in the figures, further improves the structural strength of the system. For the heat transfer fluid the use of molten salt is proposed, without limitation, thus allowing for an immediate application of this system in thermosolar power generation plants, for generation in valley periods. In this case, the use of reinforcing bars resistant to corrosion when in contact with the salt and/or made of pultruded stone fibers is recommended.

Additionally, external portions of the system may incorporate outer coatings, not represented in the figures, made of a material having thermal isolation capabilities, for example through thermal isolation concrete. In this example of the invention, these materials may be applied to the cover (10) and/or the lateral cover (2a).

Lastly, the invention envisions a number of containers provided each inside the next, thus making up a number of pairs formed by a first container (1) and a second container (2) for taking advantage of the temperature gaps between these pairs.

Once the nature of the invention has been sufficiently disclosed, note that this description and the preferred embodiment must not be interpreted as a limitation, but it covers all possible variants that may be derived from the present description and the claims.

## Claims

1. System for storing thermal energy of the type comprising, at least, a first container (1) storing a heat transfer fluid at a higher temperature and, at least, a second container (2) storing the heat transfer fluid at a lower temperature, linked by means of elements capable of using the energy due to the thermal gap therebetween; **characterized in that** the first container (1) and the second container (2) are made entirely or partly of a material having a great heat storage capability, the first container (1) being provided inside the second container (2) by means of a division (1a) which inside is in contact with the fluid at a higher temperature, and outside with the fluid at a lower temperature.

2. System for storing thermal energy according to claim 1, **characterized in that** both containers (1, 2) share the same base (11), while the division (1a) and the lateral cover (2a) comprise walls emerging from said base (11).

3. System for storing thermal energy according to claim 1, **characterized in that** both containers (1, 2) share the same cover (10), the division (1a) being provided separately therefrom.

4. System for storing thermal energy according to any of the previous claims, **characterized in that** both containers (1, 2) are provided on a common foundation slab (3) made of a material having a great heat storing capability.

5. System for storing thermal energy according to claim 4, **characterized in that** the slab (3) has a lower thermal insulation (7).

6. System for storing thermal energy according to any of claims 3 to 5, **characterized in that** the first container (1) and/or the second container (2) are provided with inner structural elements for supporting the cover (10).

7. System for storing thermal energy according to claim 6, **characterized in that** the structural elements for supporting the cover (10) comprise pillars (6).

8. System for storing thermal energy according to any of the previous claims, **characterized in that** some parts of the containers (1, 2) in contact with the heat transfer fluid have a relief (4) for increasing the thermal exchange surface therewith.

9. System for storing thermal energy according to claim 8, **characterized in that** the relief (4) are provided on the inner face of division (1a).

10. System for storing thermal energy according to any of the previous claims, **characterized in that** the division (1a) is provided with an upper channel (5) for pouring the heat transfer fluid to the first container (1).

11. System for storing thermal energy according to any of the previous claims, **characterized in that** the material having a great heat storage capability comprises heat storage concrete.

12. System for storing thermal energy according to any of the previous claims, **characterized in that** the heat transfer fluid comprises molten salt.

13. System for storing thermal energy according to any of claims 11 or 12, **characterized in that** the concrete is provided with reinforcing bars made of an alloy which is resistant to corrosion when in contact with the salt.

14. System for storing thermal energy according to any of claims 11 to 13, **characterized in that** the concrete is provided with reinforcing bars made of pultruded stone fiber.

15. System for storing thermal energy according to any of the previous claims, **characterized in that** external portions of the system incorporate external coatings made of thermally isolating materials.

16. System for storing thermal energy according to claim 15, **characterized in that** the external coatings made of thermally isolating materials comprise heat isolation concrete.

17. System for storing thermal energy according to any of the previous claims, **characterized by** comprising a number of containers provided each inside the next, thus making up a number of pairs formed by a first container (1) and a second container (2) for taking advantage of the temperature gaps between these pairs.
